(19) Europäisches Patentamt
European Patent Office
Office européen des brevets

(11) EP 3 835 390 B1

(12) **EUROPEAN PATENT SPECIFICATION**

(45) Date of publication and mention of the grant of the patent:
**17.06.2026 Bulletin 2026/25**

(21) Application number: **19847129.4**

(22) Date of filing: **06.08.2019**

(51) International Patent Classification (IPC):
***C09K 3/00*** *(2006.01)* ***C08L 101/00*** *(2006.01)*
***C09D 5/02*** *(2006.01)* ***C09D 7/40*** *(2018.01)*

(52) Cooperative Patent Classification (CPC):
(C-Sets available)
**C09D 5/022; C08L 33/12; C08L 101/12; C09D 7/40;**
C08K 5/05 (Cont.)

(86) International application number:
**PCT/JP2019/030895**

(87) International publication number:
**WO 2020/032022 (13.02.2020 Gazette 2020/07)**

(54) **RESIN COMPOSITION FOR VIBRATION-DAMPING MATERIAL**
HARZZUSAMMENSETZUNG FÜR SCHWINGUNGSDÄMPFUNGSMATERIAL
COMPOSITION DE RÉSINE POUR MATÉRIAU D’AMORTISSEMENT DES VIBRATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2018 JP 2018147639**

(43) Date of publication of application:
**16.06.2021 Bulletin 2021/24**

(73) Proprietor: **Nippon Shokubai Co., Ltd.**
**Osaka-shi, Osaka 541-0043 (JP)**

(72) Inventors:
- **MIYAWAKI, Yukihiro**
  **Suita-shi, Osaka 564-0034 (JP)**
- **NAMIMOTO, Fuyuko**
  **Suita-shi, Osaka 564-0034 (JP)**

(74) Representative: **Cabinet Beau de Loménie**
**103, rue de Grenelle**
**75340 Paris Cedex 07 (FR)**

(56) References cited:
**JP-A- 2010 275 547**
**JP-A- 2016 164 230**
**JP-A- 2016 164 230**
**JP-A- 2017 048 363**
**US-A1- 2016 311 381**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

(52) Cooperative Patent Classification (CPC): (Cont.)

C-Sets
**C08L 33/12, C08L 71/02;**
**C08L 101/12, C08L 71/02;**
C08F 212/08, C08F 220/1808, C08F 220/1804, C08F 220/06;
C08F 220/14, C08F 220/1804, C08F 220/1808, C08F 220/06

## Description

TECHNICAL FIELD

The present invention relates to a damping material resin composition. Specifically, the present invention relates to a damping material resin composition; a method of producing the resin composition; a damping coating material containing the damping material resin composition and a pigment; a coat obtainable from the damping coating material, which are suitable for a variety of structures requiring damping properties; and a vehicle including the coat.

BACKGROUND ART

Damping materials are used to prevent vibration and noise of a variety of structures to ensure sustained quietude, and are widely used for, for example, underfloor spaces of automobile interior, and for railway vehicles, ships, aircraft, electric devices, buildings, and construction machinery. Conventional damping materials are plate- or sheet-like molded products made from materials having vibration-absorbing performance and sound-absorbing performance. As an alternative to such molded products, a variety of coating-type damping compositions (damping coating materials) have been proposed which can form a coat to absorb vibration and sound.

For example, Patent Literature 1 discloses a damping-imparting agent containing a compound having a secondary alcohol ethoxylate structure. The damping-imparting agent is usable for a damping coating material.

For example, Patent Literature 2 also discloses the use of a polymer dispersion for producing a damping material. The polymer dispersion contains at least one polymer obtainable by emulsion polymerizing radically polymerisable monomers, and the polymer has a mass average molecular weight of greater than 100000, preferably greater than 100000 to 350000. Other example of damping composition is disclosed in Patent Literature 3.

CITATION LIST

- Patent Literature

Patent Literature 1: JP 2016-164230 A
Patent Literature 2: JP 2016-540090 T
Patent Literature 3: EP 3 279 285 A1

SUMMARY OF INVENTION

- Technical Problem

As described above, a variety of damping material resin compositions have been proposed. Patent Literature 2 discloses that a material having low water absorption can be provided. In particular, coats covering components of vehicles such as automobiles are exposed to high-temperature and high-humidity conditions. Such coats need to have excellent water resistance and to sufficiently maintain excellent damping properties even under these conditions.

The present invention has been made in view of the state of the art and aims to provide a method of providing a coat which has excellent water resistance and can sufficiently maintain excellent damping properties even under high-temperature and high-humidity conditions.

- Solution to Problem

The present inventors have studied various methods of providing a coat which has excellent water resistance and can sufficiently maintain excellent damping properties even under high-temperature and high-humidity conditions, and paid attention to a damping material resin composition for a coat. The present inventors found that a damping material resin composition containing a secondary alcohol ethoxylate structure-based surfactant component and a resin having a weight average molecular weight of 60000 to 350000 can provide a coat having water resistance, in particular, remarkably excellent hot water resistance, and capable of sufficiently maintaining excellent damping properties under high-temperature and high-humidity conditions. Thereby, they arrived at an admirable solution to the problem, completing the present invention.

That is, the present invention discloses a damping material resin composition according to claims 1 to 7; a method of producing the damping material resin composition according to claim 8; a damping coating material according to claim 9;

a coat obtainable from the damping coating material according to claim 9; a vehicle comprising the coat obtainable from the damping coating material according to claim 9; and the use of a compound containing a damping material resin composition and a pigment, as a damping coating material, according to claim 12.

- Advantageous Effects of Invention

The damping material resin composition of the present invention can provide a coat having excellent water resistance and capable of sufficiently maintaining excellent damping properties even under high-temperature and high-humidity conditions.

DESCRIPTION OF EMBODIMENTS

The present invention is described in detail below. Any combination of two or more of the following preferred embodiments according to the present invention is also a preferred embodiment according to the present invention.

<Damping material resin composition of the present invention>

The damping material resin composition of the present invention contains a secondary alcohol ethoxylate structure-based surfactant component represented by the formula (1) described below and a resin comprising a (meth) acrylic polymer and having a weight average molecular weight of 110000 to 350000 measured by gel permeation chromatography (GPC) under the conditions described below in paragraph [0073].

The "resin" in the present invention refers to a single polymer or a polymer mixture, a polymer composite, containing two or more polymers as described below.

The damping material resin composition of the present invention as defined in claim 1 can provide a coat having water resistance, in particular, remarkably excellent hot water resistance, and capable of sufficiently maintaining excellent damping properties under high-temperature and high-humidity conditions.

The damping material resin composition of the present invention is obtainable from the above surfactant component and the above resin or its raw material. Specifically, the damping material resin composition of the present invention may be prepared by using the surfactant component as an emulsifier in production of the resin by emulsion polymerization or by adding the surfactant component after production of the resin. In particular, since the surfactant component and the resin particles suitably interact with each other and the resulting coat can have excellent hot water resistance and can maintain much better damping properties under high-temperature and high-humidity conditions, the surfactant component is desirably used as an emulsifier in production of the resin by emulsion polymerization.

In the case where the damping material resin composition of the present invention is prepared by using the surfactant component as an emulsifier in production of the resin by emulsion polymerization, compared to the case where the damping material resin composition of the present invention is prepared by adding the surfactant component after production of the resin, there is no need to add an aqueous solution containing the surfactant component to the resin after production of the resin. Thus, a damping material resin composition having a higher solids content tends to be obtained, and the concentration is easily controlled. Thereby, the damping material resin composition of the present invention can be more stably produced.

In the present invention, the "solids" refer to components excluding solvents such as aqueous solvents, i.e., nonvolatile components.

The surfactant component may contain a reactive group. In this case, the surfactant component may be used as a reactive emulsifier in production of the resin by emulsion polymerization. At least part of the surfactant component may be introduced as a constituent unit into a polymer in the resin.

First, the following specifically describes a secondary alcohol ethoxylate structure-based surfactant component according to the present invention.

(Secondary alcohol ethoxylate structure-based surfactant component)

The secondary alcohol ethoxylate structure-based surfactant component (hereinafter, also referred to as a surfactant component according to the present invention) has a structure obtainable by adding alkylene oxides including ethylene oxide to a secondary alcohol. It has only to contain a branched hydrophobic group (e.g., hydrocarbon group) derived from a secondary alcohol and a hydrophilic group having a structure with alkylene oxides including ethylene oxide added thereto. The structure with alkylene oxides including ethylene oxide added thereto corresponds to a (poly)alkylene glycol chain obtainable by adding at least one ethylene oxide. According to the present invention, the glycol chain is an ethylene glycol chain obtainable by adding an average number of moles of ethylene oxide between 20 and 200.

In the damping material resin composition of the present invention, the secondary alcohol ethoxylate structure-based surfactant component has a structure formula (1), as further represented below, in which a (poly)alkylene glycol chain having an average number of moles of ethylene oxide added of 20 to 200 is bonded to a secondary carbon atom. The average number of moles of ethylene oxide added is more preferably 100 or less, still more preferably 70 or less, further preferably 50 or less, particularly preferably 40 or less. The average number of moles of ethylene oxide added means the average number of moles of ethylene oxide added per mole of the hydroxy groups of the secondary alcohol.

The hydroxy groups of the secondary alcohol may be attached to any positions. Preferably, the hydroxy groups are evenly attached to the secondary alcohol. The position is expressed by the position of the attached hydroxy group counted from a terminal carbon atom of the alkyl group. For example, a C12 secondary alcohol may contain hydroxy groups at positions 2, 3, 4, 5, and 6. In the distribution of the positions of the attached hydroxy groups, the amount of a component at each position (component at a specific position) is preferably up to 80%, more preferably up to 70%, still more preferably up to 50%, particularly preferably up to 40%.

In the surfactant component according to the present invention, the (poly)ethylene glycol chain of the secondary alcohol ethoxylate structure is terminated with a hydroxy group (-OH). The damping material resin composition of the present invention containing such a surfactant component can provide a coat having much better water resistance.

The surfactant component according to the present invention contains one (poly)ethylene glycol chain at each compound or each constituent unit.

The secondary alcohol ethoxylate structure of the surfactant component according to the present invention contains an organic group containing three or more carbon atoms.

The organic group is an alkyl group. The number of carbon atoms of the organic group is preferably 5 or more, more preferably 8 or more, still more preferably 10 or more, particularly preferably 12 or more. The number of carbon atoms of the organic group is preferably 30 or less, more preferably 24 or less, still more preferably 18 or less, particularly preferably 14 or less.

The surfactant component according to the present invention is a secondary alcohol ethoxylate represented by the following formula (1):

$$CH_3-(CH_2)_m-\underset{\displaystyle O(CH_2CH_2O)_xH}{\underset{|}{CH}}-(CH_2)_n-CH_3 \qquad (1)$$

wherein m and n are each an integer of 0 or more, and x is the average number of moles of ethylene oxide added and is 0 to 200.

In the formula (1), m and n are each preferably 1 or more, more preferably 2 or more, still more preferably 3 or more, particularly preferably 4 or more.

A preferred range of the sum of m and n in the formula (1) may be designed such that the total number of carbon atoms of the hydrocarbon group represented by $CH_3-(CH_2)_m-CH-(CH_2)_n-CH_3$ falls within the above-described preferred range of the number of carbon atoms of the organic group. The sum of m and n is preferably 2 or more, more preferably 5 or more, still more preferably 7 or more, particularly preferably 9 or more. The number of carbon atoms is preferably 27 or less, more preferably 21 or less, still more preferably 15 or less, particularly preferably 11 or less.

A preferred range of x in the formula (1) is the same as the above-described preferred range of the average number of moles of ethylene oxide added.

The surfactant component according to the present invention can be prepared by a conventionally known method such as addition of ethylene oxide to a hydroxy group of a secondary alcohol. The compound according to the present invention may be a commercial product. Examples of the commercial product include SOFTANOL M series such as SOFTANOL 90, SOFTANOL 120, SOFTANOL 200, SOFTANOL 300, SOFTANOL 400, and SOFTANOL 500 and SOFTANOL L series such as SOFTANOL L90 (each available from Nippon Shokubai Co., Ltd.).

As described above, the surfactant component according to the present invention is a nonionic one in which the (poly)ethylene glycol chain is terminated with a hydroxy group.

The damping material resin composition of the present invention preferably contains the secondary alcohol ethoxylate structure-based surfactant component in an amount of 0.1% by mass or more, more preferably 0.5% by mass or more, still more preferably 1% by mass or more, particularly preferably 2% by mass or more, based on 100% by mass of the solids of the resin in the damping material resin composition. The damping material resin composition of the present invention preferably contains the secondary alcohol ethoxylate structure-based surfactant component in an amount of 30% by mass or less, more preferably 20% by mass or less, still more preferably 10% by mass or less, particularly preferably 8% by mass or less, based on 100% by mass of the solids of the resin in the damping material resin composition.

The damping material resin composition of the present invention further contains an anionic surfactant component. This more stabilizes the damping material resin composition of the present invention, particularly in the form of an emulsion, containing an anionic surfactant component.

The anionic surfactant component may be suitably used as an emulsifier in production of the resin by emulsion polymerization or may be added directly to the resin after production of the resin. The anionic surfactant component may contain a reactive group. In this case, the anionic surfactant component may be used as a reactive emulsifier in production of the resin by emulsion polymerization. At least part of the anionic surfactant component may be introduced as a constituent unit into the resin.

The anionic surfactant component preferably contains an aliphatic hydrocarbon group-containing anionic surfactant component.

The aliphatic hydrocarbon group-containing anionic surfactant component is preferably a sulfate compound or a succinate compound. The sulfate compound contains at least one selected from the group consisting of an aliphatic alkyl group containing 8 or more carbon atoms, an oleyl group, an alkyl phenyl group, a styryl group, and a benzyl group. The aliphatic alkyl group containing 8 or more carbon atoms is more preferably one containing 12 or more carbon atoms or one containing at least one aromatic ring.

In a preferred embodiment of the present invention, the aliphatic hydrocarbon group is a linear aliphatic hydrocarbon group.

Preferred among these anionic surfactant components having a specific structure are a polyoxyalkylene alkyl ether sulfate and/or a polyoxyalkylene oleyl ether sodium sulfate.

Use of any of these anionic surfactant components more effectively achieves the properties of the damping material resin composition of the present invention.

Particularly preferred among these anionic surfactant components having a specific structure is a polyoxyethylene alkyl ether sulfate containing an ethylene oxide chain having an average number of moles of ethylene oxide added of 15 to 35.

Particularly suitable compounds as these anionic surfactant components include a reactive emulsifier described later and LATEMUL WX, LEVENOL WZ, and LATEMUL 118B (Kao Corporation).

Each anionic surfactant component may also be a polymerizable group-containing reactive emulsifier (reactive anionic emulsifier). The polymerizable group-containing reactive emulsifier may be introduced as a constituent unit into a polymer in the emulsion during emulsion polymerization. In particular, a reactive emulsifier containing a polymerizable group such as vinyl, allyl, (meth)acryloyl, or propenyl group is suitably used. Examples of the reactive emulsifier include a sulfosuccinate reactive emulsifier, an alkenyl succinate reactive emulsifier, and a sulfate reactive emulsifier. One or more of these may be used.

Examples of commercial products of the sulfosuccinate reactive emulsifier include LATEMUL S-120, S-120A, S-180, and S-180A (trade names, Kao Corporation), and ELEMINOL JS-2 (a trade name, Sanyo Chemical Industries, Ltd.).

Examples of commercial products of the alkenyl succinate reactive emulsifier include LATEMUL ASK (a trade name, Kao Corporation).

Examples of commercial products of the sulfate reactive emulsifier include ADEKA REASOAP SR-10, SR-20, and SR-30 (Adeka Corporation), (meth)acrylic acid polyoxyethylene sulfonates (e.g., "ELEMINOL RS-30" available from Sanyo Chemical Industries, Ltd., "ANTOX MS-60" available from Nippon Nyukazai Co., Ltd.), allyloxymethyl alkyloxy polyoxyethylene sulfonates (e.g., "AQUALON KH-5" and "AQUALON KH-10" available from Dai-Ichi Kogyo Seiyaku Co., Ltd.), and polyoxyalkylene alkenyl ether ammonium sulfates (e.g., "LATEMUL PD-104" available from Kao Corp.).

In the anionic surfactant component, the aliphatic hydrocarbon group-containing anionic surfactant component is preferably present in an amount of 50% by mass or more, more preferably 70% by mass or more, still more preferably 90% by mass or more, particularly preferably 100% by mass.

The damping material resin composition of the present invention preferably contains the anionic surfactant component in an amount of 0.1% by mass or more, more preferably 0.5% by mass or more, still more preferably 1% by mass or more, particularly preferably 2% by mass or more, based on 100% by mass of the solids of the resin in the damping material resin composition. The damping material resin composition of the present invention also preferably contains the anionic surfactant component in an amount of 30% by mass or less, more preferably 20% by mass or less, still more preferably 10% by mass or less, particularly preferably 8% by mass or less, based on 100% by mass of the solids of the resin in the damping material resin composition.

The secondary alcohol ethoxylate structure-based surfactant component and the anionic surfactant component are present in a mass ratio of 3:7 to 7:3.

(Resin having weight average molecular weight of 60000 to 350000)

The damping material resin composition of the present invention contains a resin having a weight average molecular weight of 110000 to 350000. The weight average molecular weight is preferably 150000 or greater, further more preferably 180000 or greater, still further more preferably 200000 or greater, particularly preferably 220000 or greater. The weight average molecular weight is preferably 320000 or smaller, more preferably 300000 or smaller, still more preferably

280000 or smaller.

The weight average molecular weight (Mw) is measured using GPC under the conditions stated in the examples below.

The resin preferably contains at least one polymer (hereinafter, also referred to as a polymer according to the present invention) selected from a (meth) acrylic polymer.

The (meth)acrylic polymer does not need to be derived from a (meth)acrylic monomer as long as the polymer contains a constituent unit which can be derived from a (meth)acrylic monomer. Examples of the (meth)acrylic monomer include a alkyl (meth)acrylate monomer and a (meth)acrylic acid monomer. The (meth)acrylic acid alkyl ester monomer is a monomer containing a carboxylic acid ester group in which the carboxyl group of (meth)acrylic acid is esterified with an alkyl alcohol and refers to a compound (monomer) containing an acryloyloxy group or a methacryloyloxy group and an alkyl group.

Examples of the (meth)acrylic acid alkyl ester monomer include methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, pentyl acrylate, pentyl methacrylate, isoamyl acrylate, isoamyl methacrylate, hexyl acrylate, hexyl methacrylate, cyclohexyl acrylate, cyclohexyl methacrylate, octyl acrylate, octyl methacrylate, isooctyl acrylate, isooctyl methacrylate, nonyl acrylate, nonyl methacrylate, isononyl acrylate, isononyl methacrylate, decyl acrylate, decyl methacrylate, dodecyl acrylate, dodecyl methacrylate, tridecyl acrylate, tridecyl methacrylate, hexadecyl acrylate, hexadecyl methacrylate, octadecyl acrylate, octadecyl methacrylate, 2-ethylhexyl acrylate, and 2-ethylhexyl methacrylate. One or more of these may be suitably used.

A monomer component for producing the (meth)acrylic acid alkyl ester polymer contains the (meth)acrylic acid alkyl ester-based monomer in an amount of preferably 20% by mass or more, more preferably 40% by mass or more, still more preferably 60% by mass or more, particularly preferably 65% by mass or more, based on 100% by mass of the entire monomer component. The monomer component contains the (meth)acrylic acid alkyl ester monomer in an amount of preferably 99.9% by mass or less, more preferably 99.8% by mass or less, still more preferably 99.6% by mass or less, particularly preferably 99.5% by mass or less, based on 100% by mass of the entire monomer component.

The (meth)acrylic polymer preferably further contains a constituent unit derived from a (meth)acrylic acid monomer. The (meth)acrylic acid monomer is a compound (monomer) in which a hydrogen atom is bonded to an acryloyloxy group or a methacryloyloxy group or a compound (monomer) in which a hydrogen atom is replaced with another atom or an atomic group. Specifically, the (meth)acrylic acid monomer is a monomer containing a carboxyl group (-COOH group) which contains the carbonyl group in the group, a carboxylate group which is a salt of a carboxyl group, or an acid anhydride group (-C(=O)-O-C(=O)- group) of a carboxyl group. When the (meth)acrylic polymer contains a constituent unit derived from a (meth)acrylic acid monomer, in a damping coating material containing the damping material resin composition of the present invention, a pigment or the like is better dispersed, for example, giving a coat having much better functions.

The (meth)acrylic acid monomer is preferably (meth)acrylic acid or a salt of (meth)acrylic acid. The (meth)acrylic acid includes acrylic acid and/or methacrylic acid.

Preferred examples of a salt of the (meth)acrylic acid monomer include a metal salt, an ammonium salt, and an organic amine salt. Suitable examples of a metal atom of the metal salt include monovalent metal atoms such as lithium, sodium, potassium, and other alkali metal atoms; divalent metal atoms such as calcium and magnesium; and trivalent metal atoms such as aluminum and iron. Suitable examples of the organic amine salt include alkanolamine salts such as an ethanolamine salt, a diethanolamine salt, and a triethanolamine salt; and a triethylamine salt.

The (meth)acrylic polymer is preferably obtainable by copolymerizing a (meth)acrylic acid monomer in an amount of 0.1 to 5% by mass based on 100% by mass of the entire monomer component, for example. In the monomer component, the (meth)acrylic acid monomer is more preferably present in an amount of 0.3% by mass or more, still more preferably 0.5% by mass or more, particularly preferably 0.7% by mass or more. In the monomer component, the (meth) acrylic acid monomer is preferably present in an amount of 5% by mass or less, more preferably 4% by mass or less, still more preferably 3% by mass or less. With the (meth)acrylic acid monomer in an amount within the range, the monomer component is stably copolymerized.

The (meth)acrylic polymer may further contain a constituent unit derived from a different copolymerizable unsaturated monomer other than the (meth)acrylic acid alkyl ester monomer and the (meth)acrylic acid monomer.

Examples of the different copolymerizable unsaturated monomer include monomers such as 2-hydroxyethyl acrylate, 2-hydroxyethyl methacrylate, 2-hydroxypropyl acrylate, 2-hydroxypropyl methacrylate, diallyl phthalate, triallyl cyanurate, ethylene glycol diacrylate, ethylene glycol dimethacrylate, 1,4-butanediol diacrylate, 1,4-butanediol dimethacrylate, 1,6-hexanediol diacrylate, 1,6-hexanediol dimethacrylate, diethylene glycol diacrylate, diethylene glycol dimethacrylate, allyl acrylate, and allyl methacrylate; esters of (meth)acrylic acid monomers, other than these, acrylamide, and methacrylamide; amides of (meth)acrylic acid monomers, other than these, acrylonitrile, a polyfunctional unsaturated monomer such as trimethylolpropane diallyl ether, and vinyl acetate. One or more of these may be suitably used.

The resin may contain a diene polymer as long as the diene polymer does not prevent solving of the problem to be solved by the present invention. The diene polymer is obtainable by polymerizing a monomer component containing a diene monomer.

Preferred examples of the diene polymer include acrylonitrile-butadiene rubber (NBR), methyl methacrylate-butadiene rubber (MBR), and styrene-butadiene rubber (SBR). One or more of these may be used.

To further achieve the effects of the present invention, the resin preferably contains a (meth)acrylic polymer. For example, in a particularly preferred embodiment of the present invention, the resin contains a (meth)acrylic polymer as the only polymer.

Preferably, the damping material resin composition of the present invention includes an aqueous solvent, and the resin is dispersed or dissolved in the aqueous solvent. The resin is more preferably dispersed in the aqueous solvent. In other words, the damping material resin composition of the present invention is more preferably an emulsion. The phrase "dispersed" in the aqueous solvent herein means that a target substance is not dissolved but dispersed in the aqueous solvent.

The resin may be prepared by polymerization by a known method such as solution polymerization or suspension polymerization, for example. Preferably, the resin is in the form of emulsion resin particles (resin particles present in an emulsion) obtainable by emulsion polymerizing a monomer component.

The damping material resin composition of the present invention contains the resin according to the present invention. The resin according to the present invention may contain one or more polymers. When the resin contains two or more polymers, the resin may be a mixture obtainable by mixing (blending) two or more polymers according to the present invention or a composite of two or more polymers according to the present invention, obtainable through production of a substance containing two or more polymers according to the present invention (e.g., by multistage polymerization) in a series of production steps. To obtain the substance containing two or more polymers according to the present invention in a series of production steps, the production conditions such as conditions of dropwise addition of monomers are appropriately designed. The composite of two or more polymers according to the present invention may have, for example, a core and a shell as described below. When the polymer according to the present invention has a core and a shell, for example, the polymer according to the present invention contains two polymers according to the present invention, and one of the polymers according to the present invention may constitute a core and the other may constitute a shell. In an embodiment of the present invention the (meth)acrylic polymer has a core and a shell. In the (meth)acrylic polymer having a core and a shell, the (meth)acrylic polymer is obtainable from a monomer component containing a (meth)acrylic monomer, and it is sufficient that the monomer component contains a (meth)acrylic monomer in any of the production steps where the monomer component is used. For example, it is sufficient as long as a (meth)acrylic monomer is present in the monomer component to be a core or in the monomer component to be a shell in the emulsion resin particles. The (meth) acrylic monomer may be present in both monomer components.

The resin preferably has a glass transition temperature of -30°C to 40°C. Use of a resin having such a glass transition temperature can effectively impart the damping performance in the practical temperature range of the damping material. The glass transition temperature of the resin is more preferably -20°C to 35°C, still more preferably -15°C to 30°C.

The glass transition temperature (Tg) is calculated using the following formula (1) from the formulation of monomers used.

$$\frac{1}{Tg'} = \left[ \frac{W_1'}{T_1} + \frac{W_2'}{T_2} + \cdot \cdot \cdot + \frac{W_n'}{T_n} \right] \qquad (1)$$

In the formula, Tg' represents Tg (absolute temperature) of a polymer; $W_1$', $W_2$', ..., and Wn' each represent the mass fraction of each monomer relative to the entire monomer component; and $T_1$, $T_2$, ..., and Tn each represent the glass transition temperature (absolute temperature) of the homopolymer of each monomer.

When the resin according to the present invention contains two or more polymers or when the resin contains at least one polymer prepared through multistage polymerization (e.g., the resin is in the form of emulsion resin particles containing a core and a shell), the glass transition temperature refers to Tg (total Tg) calculated from the formulation of monomers used in the all stages.

The resin preferably has an average particle size of 80 to 450 nm.

With a resin having such an average particle size, basic properties such as coatability required for the damping material are sufficiently achieved, and much better damping properties can be achieved. The average particle size is more preferably 400 nm or smaller, still more preferably 350 nm or less. The average particle size is preferably 100 nm or greater.

The average particle size may be measured by the method stated in the examples below.

The damping material resin composition of the present invention preferably contains the solids of the resin in an

amount of 20% by mass or more, more preferably 40% by mass or more, still more preferably 60% by mass or more, particularly preferably 80% by mass or more, most preferably 90% by mass or more in 100% by mass of the solids of the damping material resin composition of the present invention.

(Different component)

The damping material resin composition of the present invention containing the above-described surfactant components and the resin may further contain a different component other than the above-described surfactant components and the resin as long as the different component does not impair the effects. Examples of the different component include known surfactants such as compounds having a primary alcohol ethoxylate structure, solvents, and antiseptic agents.

(Solvent)

The damping material resin composition of the present invention preferably contains a solvent such as an aqueous solvent as a different component.

The aqueous solvent herein may contain an organic solvent as long as the aqueous solvent contains water. The aqueous solvent is preferably water.

The damping material resin composition of the present invention preferably has a solids content of 40 to 80% by mass, more preferably 50 to 70% by mass.

The damping material resin composition of the present invention may have any pH. The pH is preferably 2 to 10, more preferably 3 to 9.5, still more preferably 7 to 9. The pH can be adjusted by adding ammonia water, a watersoluble amine, an aqueous alkali hydroxide solution, or the like, to the resin.

The pH herein may be measured by the method stated in the examples below.

The damping material resin composition of the present invention may have any viscosity. The viscosity is preferably 1 to 10000 mPa·s, more preferably 2 to 8000 mPa·s, still more preferably 3 to 6000 mPa·s, further preferably 5 to 5000 mPa·s, further more preferably 10 to 4000 mPa·s, still further more preferably 20 to 3000 mPa·s, particularly preferably 30 to 2000 mPa·s, further particularly preferably 40 to 1000 mPa·s, most preferably 50 to 500 mPa·s.

The viscosity herein can be measured under the conditions stated in the examples below.

The damping material resin composition of the present invention itself may be applied to form a damping film. Still, it is usually used to obtain a damping coating material of the present invention described later.

<Method of producing damping material resin composition of the present invention>

The damping material resin composition of the present invention may be produced by any method. For example, it can be suitably produced by the same method as the production method disclosed in JP 2011-231184 A.

The present invention also relates a method of producing a damping material resin composition, comprising: emulsion polymerizing a monomer component in the presence of a secondary alcohol ethoxylate structure-based surfactant component, which has the structure represented by formula (1) as well as an anionic surfactant component, wherein the secondary alcohol ethoxylate structure-based surfactant component and the anionic surfactant component are present in a mass ratio of 3:7 to 7:3, to prepare emulsion resin particles comprising a (meth)acrylic polymer and having a weight average molecular weight of 110000 to 350000 measured by gel permeation chromatography (GPC) under the conditions stated in the examples below. A coat including the thus produced damping material resin composition has better hot water resistance and can maintain better damping properties under high-temperature and high-humidity conditions. The production method also easily produces a damping material resin composition having a high solids content, enables easy control of the concentration, and can more stably produce the damping material resin composition of the present invention.

The emulsion polymerization may be performed at any polymerization temperature. The polymerization temperature is, for example, preferably 0°C to 100°C, more preferably 30°C to 90°C. The polymerization may be performed for any duration. The duration is, for example, preferably 0.1 to 15 hours, more preferably 1 to 10 hours.

<Damping coating material of the present invention>

The present invention also relates to a damping coating material containing the damping material resin composition of the present invention and a pigment. A preferred damping material resin composition in the damping coating material of the present invention is the same as the above-described preferred damping material resin composition of the present invention.

In 100% by mass of the solids of the damping coating material of the present invention, the damping material resin composition of the present invention preferably contains the solids of the resin in an amount of 1% by mass or more, more preferably 5% by mass or more, still more preferably 10% by mass or more, particularly preferably 15% by mass or more.

The amount of the solids of the resin is preferably 70% by mass or less, more preferably 60% by mass or less, still more preferably 50% by mass or less.

(Pigment)

The pigment may be an organic pigment or an inorganic pigment, preferably an inorganic pigment. Examples of the inorganic pigment include an inorganic colorant, an antirust pigment, and a filler. One or more of these may be used. Examples of the inorganic colorant include titanium oxide, carbon black, and colcothar. Examples of the antirust pigment include a metal phosphate, a metal molybdate, and a metal borate. Examples of the filler include inorganic fillers such as calcium carbonate, kaolin, silica, talc, barium sulfate, alumina, iron oxide, glass powder, magnesium carbonate, aluminum hydroxide, diatomaceous earth, and clay; flaky inorganic fillers such as glass flakes and mica; and fibrous inorganic fillers such as metal oxide whiskers and glass fibers.
The pigment preferably has an average particle size of 1 to 50 μm. The average particle size of the pigment can be measured with a laser diffraction particle size distribution analyzer, and is a value of the particle size at which the weight according to the particle size distribution reaches 50%.
The amount of the pigment is preferably 10 to 900 parts by mass, more preferably 100 to 800 parts by mass, still more preferably 200 to 500 parts by mass, based on 100 parts by mass of the solids of the resin in the damping coating material of the present invention.

(Dispersant)

The damping coating material of the present invention may further contain a dispersant.
Examples of the dispersant include inorganic dispersants such as sodium hexametaphosphate and sodium tripolyphosphate and organic dispersants such as polycarboxylic acid dispersants.
The amount of the dispersant is preferably 0.1 to 8 parts by mass, more preferably 0.5 to 6 parts by mass, still more preferably 1 to 3 parts by mass, in terms of solid, based on 100 parts by mass of the solids of the resin in the damping coating material of the present invention.

(Thickener)

The damping coating material of the present invention may further contain a thickener.
Examples of the thickener include polyvinyl alcohol, cellulose derivatives, and polycarboxylic acid resins.
The amount of the thickener is preferably 0.01 to 5 parts by mass, more preferably 0.1 to 4 parts by mass, still more preferably 0.2 to 2 parts by mass, based on 100 parts by mass of the solids of the resin in the damping coating material of the present invention.

(Different component)

The damping coating material of the present invention may further contain a different component. Examples of the different component include foaming agents, solvents, organic colorants, gelling agents, defoaming agents, plasticizers, stabilizers, wetting agents, antiseptic agents, foaming inhibitors, antioxidants, mildew-proofing agents, ultraviolet absorbers, and antistatic agents. One or two or more of these may be used.
The above-described pigment, dispersant, thickener, and different component may be mixed with the surfactant component and resin according to the present invention with a disperser, butterfly mixer, planetary mixer, spiral mixer, kneader, dissolver, or the like.

(Solvent)

Examples of the solvent include water and organic solvents such as ethylene glycol, butyl cellosolve, butyl carbitol, and butyl carbitol acetate. The amount of the solvent added may be appropriately designed so as to control the solids concentration of the damping coating material of the present invention.

(Use as damping coating material)

The present invention also relates to use of a compound containing the damping material resin composition and a pigment, as a damping coating material. The damping material resin composition comprises a secondary alcohol ethoxylate structure-based surfactant component, which has the structure represented by formula (1) as well as an anionic surfactant component, wherein the secondary alcohol ethoxylate structure-based surfactant component and the

anionic surfactant component are present in a mass ratio of 3:7 to 7:3, and a resin comprising a (meth)acrylic polymer and having a weight average molecular weight of 110000 to 350000 measured by gel permeation chromatography (GPC) under the conditions stated in the examples below.

<Coat of the present invention>

The present invention also relates to a damping material (coat) obtainable from the damping coating material of the present invention.
The coat of the present invention preferably has a thickness of 2 to 8 mm. To achieve more sufficient damping properties and to form a favorable coat, such a thickness is preferred. The thickness of the coat is more preferably 2 to 6 mm, still more preferably 2 to 5 mm.
The coat of the present invention may be formed on any substrate on which the coat can be formed. The substrate may be formed from any material such as a plastic material or a metal material such as a steel plate. In particular, in a preferred embodiment of the use of the damping coat of the present invention, the coat is formed on a surface of a steel plate.
The coat of the present invention may be obtained by applying the damping coating material of the present invention using a brush, spatula, air spray, airless spray, mortar gun, or texture gun, for example.
The coat of the present invention is preferably obtainable by heat-drying the damping coating material of the present invention applied to a substrate. A coat obtained by applying the damping coating material of the present invention to a substrate is preferably heat-dried at 40°C to 200°C, more preferably at 90°C to 180°C, still more preferably at 100°C to 160°C. Before the heat-drying, the coat may be pre-dried at a lower temperature.
The coat is preferably heated at the above-described temperature for 1 to 300 minutes, more preferably 2 to 250 minutes, particularly preferably 10 to 150 minutes.
The damping properties of the coat of the present invention can be evaluated by measuring the loss coefficient of the coat.
The loss coefficient is usually represented by $\eta$ and indicates the degree of attenuation of vibration applied to the coat. A larger value of the loss coefficient indicates better damping performance.
The loss coefficient can be measured by the method disclosed in the examples below.
The coat of the present invention obtained from the damping material resin composition of the present invention has excellent water resistance and can sufficiently maintain excellent damping properties even under high-temperature and high-humidity conditions. Specifically, the coat of the present invention reduces a decrease in damping properties and reduces the change of a curve of correlation (damping property curve) between temperature and damping properties. Thereby, the quality of the coat can be maintained over a long period of time. The coat of the present invention is suitable for transportation means such as automobiles, railway vehicles, ships, and aircraft, electric devices, buildings, and construction machinery.

<Vehicle of the present invention>

The present invention relates to a vehicle including the coat of the present invention. The vehicle of the present invention needs to include at least one constitutional member including the coat of the present invention. Examples of the vehicle include automobiles, railway vehicles, ships, and aircraft. The vehicle of the present invention containing the coat of the present invention can sufficiently maintain excellent damping properties even under high-temperature and high-humidity conditions.

EXAMPLES

The following description is offered to demonstrate the present invention based on embodiments of the present invention. Unless otherwise mentioned, the term "part(s)" means "part(s) by weight" and "%" means "% by mass".
The properties were evaluated in the production examples as follows.

<Average particle size>

The average particle size of emulsion resin particles was measured by dynamic light scattering using a particle size distribution analyzer (FPAR-1000, Otsuka Electronics Co., Ltd.).

<Nonvolatile content (N.V.)>

About 1 g of the resulting emulsion was weighed and dried in a hot air dryer at 150°C for one hour. Thereafter, the

amount of the residue left after drying was measured to determine the nonvolatile content. The nonvolatile content was expressed as the ratio (% by mass) of the mass of the residue to the mass of the emulsion before drying.

<pH>

The pH at 25°C was measured using a pH meter ("F-23" available from Horiba, Ltd.).

<Viscosity>

The viscosity was measured at 25°C and 20 rpm using a B-type rotary viscometer ("VISCOMETER TUB-10" available from Toki Sangyo Co., Ltd.).

<Weight average molecular weight>

The weight average molecular weight was measured by gel permeation chromatography (GPC) under the following conditions.

Measuring equipment: HLC-8120GPC (trade name, available from Tosoh Corporation)
Molecular-weight column: TSK-GEL GMHXL-L and TSK-GEL G5000HXL (both available from Tosoh Corporation) connected in series
Eluent: Tetrahydrofuran (THF)
Calibration curve reference material: polystyrene (Tosoh Corporation)
Measuring method: a measurement object was dissolved in THF to about 0.2% by mass in terms of solids content, and the solution was passed through a filter to obtain a filtrate as a sample to be measured. The molecular weight of the filtrate was measured.

The Tg calculated from the formulation of the monomers in all the stages was expressed as "total Tg".
The following shows the glass transition temperatures (Tgs) of the homopolymers of the respective polymerizable monomers, which were used to calculate the Tgs of the respective polymerizable monomers based on the equation (1).

Methyl methacrylate (MMA): 105°C
Styrene (St): 100°C
Butyl acrylate (BA): -56°C
2-Ethylhexyl acrylate (2EHA): -70°C
Acrylic acid (AA): 95°C

<Production example of emulsion (damping material resin composition of the present invention), etc.>

(Production Example 1)

A polymerization vessel equipped with a stirrer, a reflux condenser, a thermometer, a nitrogen inlet, and a dropping funnel was charged with 280 parts of deionized water. Thereafter, the internal temperature was increased to 75°C under stirring and nitrogen flow. The dropping funnel was charged with a monomer emulsion containing 550 parts of methyl methacrylate, 310 parts of butyl acrylate, 130 parts of 2-ethylhexyl acrylate, 10 parts of acrylic acid, 1.2 parts of t-dodecyl mercaptan (t-DM) as a chain transfer agent, 125 parts of a 20% aqueous solution of SOFTANOL 300 (Nippon Shokubai Co., Ltd.) prepared in advance, 125 parts of a 20% aqueous solution of LEVENOL WZ (trade name, Kao Corporation) prepared in advance, and 183.0 parts of deionized water. Then, a 27.0-part portion of the monomer emulsion, 5 parts of a 5% aqueous solution of potassium persulfate as a polymerization initiator (oxidant), and 10 parts of a 2% aqueous solution of sodium bisulfite were added to the polymerization vessel with the internal temperature thereof being maintained at 75°C to start initial polymerization. After 40 minutes, the rest of the monomer emulsion was uniformly added dropwise over 210 minutes with the reaction system being maintained at 80°C. Simultaneously therewith, 95 parts of a 5% aqueous solution of potassium persulfate and 90 parts of a 2% aqueous solution of sodium bisulfite were uniformly added dropwise over 210 minutes. After completion of the dropwise addition, the temperature was maintained for 60 minutes to complete the polymerization.
The resulting reaction liquid was cooled to room temperature, and 16.7 parts of 2-dimethyl ethanolamine and 39 parts of deionized water were added thereto. Thus, an acrylic emulsion (all-acrylic emulsion) 1 was obtained which had a nonvolatile content of 55.0%, a pH of 8.5, a viscosity of 300 mPa·s, and an average particle size of 200 nm. The polymer in

the acrylic emulsion 1 had a glass transition temperature of 8.6°C and a weight average molecular weight of 347000.

(Production Example 2)

An acrylic emulsion (acrylic styrene emulsion) 2 was obtained through the reaction as in Production Example 1 except that 550 parts of styrene, 130 parts of butyl acrylate, and 310 parts of 2-ethylhexyl acrylate were used instead of 550 parts of methyl methacrylate, 310 parts of butyl acrylate, and 130 parts of 2-ethylhexyl acrylate. The polymer in the acrylic emulsion 2 had a glass transition temperature of 7.1°C and a weight average molecular weight of 276000.

(Production Example 3)

An acrylic emulsion (all-acrylic emulsion) 3 was obtained through the reaction as in Production Example 1 except that 125 parts of a 20% aqueous solution of SOFTANOL 90 (Nippon Shokubai Co., Ltd.) prepared in advance was used instead of 125 parts of a 20% aqueous solution of SOFTANOL 300 (Nippon Shokubai Co., Ltd.) prepared in advance, and the amount of t-dodecyl mercaptan was changed from 1.2 parts to 1.8 parts. The acrylic emulsion 3 had a weight average molecular weight of 221000.

(Production Example 4)

An acrylic emulsion (acrylic styrene emulsion) 4 was obtained through the reaction as in Production Example 1 except that 125 parts of a 20% aqueous solution of ADEKA REASOAP SR-10 (trade name, Adeka Corporation) prepared in advance was used instead of 125 parts of a 20% aqueous solution of LEVENOL WZ (trade name, Kao Corporation) prepared in advance, 550 parts of styrene was used instead of 550 parts of methyl methacrylate, and the amount of t-dodecyl mercaptan was changed from 1.2 parts to 2.5 parts. The acrylic emulsion 4 had a weight average molecular weight of 155000.

(Production Example 5)

An acrylic emulsion (acrylic styrene emulsion) 5 was obtained through the reaction as in Production Example 1 except that 125 parts of a 20% aqueous solution of SOFTANOL 500 (Nippon Shokubai Co., Ltd.) prepared in advance was used instead of 125 parts of a 20% aqueous solution of SOFTANOL 300 (Nippon Shokubai Co., Ltd.) prepared in advance, and the amount of t-dodecyl mercaptan was changed from 1.2 parts to 3.5 parts. The acrylic emulsion 5 had a weight average molecular weight of 85000.

(Production Example 6)

An acrylic emulsion (acrylic styrene emulsion) 6 was obtained through the reaction as in Production Example 1 except that 125 parts of a 20% aqueous solution of SOFTANOL 500 (Nippon Shokubai Co., Ltd.) prepared in advance and 200 parts of a 20% aqueous solution of LEVENOL WZ (trade name, Kao Corporation) prepared in advance were used instead of 125 parts of a 20% aqueous solution of SOFTANOL 300 (Nippon Shokubai Co., Ltd.) prepared in advance and 125 parts of a 20% aqueous solution of LEVENOL WZ (trade name, Kao Corporation) prepared in advance, and the amount of t-dodecyl mercaptan was changed from 1.2 parts to 2.7 parts. The acrylic emulsion 6 had a weight average molecular weight of 115000.

(Production Example 7)

An acrylic emulsion (all-acrylic emulsion) 7 was obtained through the reaction as in Production Example 1 except that 250 parts of a 20% aqueous solution of LEVENOL WZ (trade name, Kao Corporation) prepared in advance was used instead of 125 parts of a 20% aqueous solution of SOFTANOL 300 (Nippon Shokubai Co., Ltd.) prepared in advance and 125 parts of a 20% aqueous solution of LEVENOL WZ (trade name, Kao Corporation) prepared in advance, and the amount of t-dodecyl mercaptan was changed from 1.2 parts to 1.8 parts. The acrylic emulsion 7 had a weight average molecular weight of 230000.

(Production Example 8)

An acrylic emulsion (all-acrylic emulsion) 8 was obtained through the reaction as in Production Example 1 except that 250 parts of a 20% aqueous solution of NEOPELEX G-65 (trade name, Kao Corporation) prepared in advance was used instead of 125 parts of a 20% aqueous solution of SOFTANOL 300 (Nippon Shokubai Co., Ltd.) prepared in advance

and 125 parts of a 20% aqueous solution of LEVENOL WZ (trade name, Kao Corporation) prepared in advance, and the amount of t-dodecyl mercaptan was changed from 1.2 parts to 1.8 parts. The acrylic emulsion 8 had a weight average molecular weight of 228000.

(Production Example 9)

An acrylic emulsion (all-acrylic emulsion) 9 was obtained through the reaction as in Production Example 1 except that the amount of t-dodecyl mercaptan was changed from 1.2 parts to 5.0 parts. The acrylic emulsion 9 had a weight average molecular weight of 51000.

The following describes the specific contents of the secondary alcohol ethoxylate structure-based surfactants used in the production examples.

(SOFTANOL 300)

Product of Nippon Shokubai Co., Ltd., polyoxyethylene alkyl ether (secondary alcohol ethoxylate), number of moles of EO added: 30, number of carbon atoms of the alkyl group of the secondary alcohol: 12 to 14

(SOFTANOL 90)

Product of Nippon Shokubai Co., Ltd., polyoxyethylene alkyl ether (secondary alcohol ethoxylate), number of moles of EO added: 9, number of carbon atoms of the alkyl group of the secondary alcohol: 12 to 14

(SOFTANOL 500)

Product of Nippon Shokubai Co., Ltd., polyoxyethylene alkyl ether (secondary alcohol ethoxylate), number of moles of EO added: 50, number of carbon atoms of the alkyl group of the secondary alcohol: 12 to 14

The following describes the contents of the anionic surfactants used in the production examples.

(LEVENOL WZ)

Product of Kao Corporation: sodium polyoxyethylene alkyl ether sulfate

(ADEKA REASOAP SR-10)

Product of Adeka Corporation: allyloxymethyl alkoxy ethyl hydroxy polyoxyethylene sulfate

(NEOPELEX G-65)

Product of Kao Corporation: sodium dodecylbenzenesulfonate

(Inventive Examples 1 to 4 and 6, Reference Example 5 and Comparative Examples 1 to 3)

<Preparation of damping coating material>

Damping coating materials were prepared in Inventive Examples 1 to 4 and 6, and Reference Example 5 in which the acrylic emulsions 1 to 6 prepared in Production Examples 1 to 6 were added, respectively, as follows, and prepared in Comparative Examples 1 to 3 in which the acrylic emulsions 7 to 9 prepared in Production Examples 7 to 9 were added, respectively, as follows. The damping coating materials were subjected to evaluation of various properties as described below. The results are shown in Table 1.

Acrylic emulsions 1 to 9 350 parts
Calcium carbonate NN#200*1 620 parts
Dispersant AQUALIC DL-40S*2 6 parts
Thickener ACRYSET WR-650*3 4 parts
*1: Filler available from Nitto Funka Kogyo K.K.
*2: Polycarboxylic acid-type dispersant (active component: 44%) available from Nippon Shokubai Co., Ltd.
*3: Alkali-soluble acrylic thickener (active component: 30%) available from Nippon Shokubai Co., Ltd.

The following describes the methods of evaluating the properties.

The damping coating materials prepared in the examples and the comparative examples were subjected to evaluation of appearance of coat, a damping property test, and evaluation of mechanical stability by the following methods. The results are shown in Table 1.

<Damping test>

The damping coating materials prepared in Examples 1 to 6 and Comparative Examples 1 to 3 were applied to cold rolled steel plates (trade name SPCC, 15 mm width × 250 mm length × 1.5 mm thickness, Nippon Testpanel Co., Ltd.) to prepare 3 mm-thick films. The films were pre-dried at 80°C for 30 minutes, and dried at 150°C for 30 minutes. Thus, damping material films having a surface density of 4.0 kg/$m^2$ were formed on the cold rolled steel plates.

The damping properties were determined by evaluating a loss coefficient at a temperature of 10°C, 30°C, or 50°C by a cantilever method (loss factor measurement system, Ono Sokki Co., Ltd.). The damping properties were evaluated based on the total loss coefficient (the sum of loss coefficients at 10°C, 30°C, and 50°C). A larger value of the total loss coefficient indicates better damping properties.

<Evaluation of water resistance>

(Evaluation of percentage of water absorption)

Specimens (50 mm width × 100 mm length × 4.0 mm thickness) were prepared from the damping coating materials of Examples 1 to 6 and Comparative Examples 1 to 3, and dried at 150°C for 50 minutes to give dry coats. Subsequently, the weights of the dry coats were measured. The dry coats were immersed in deionized water at 25°C or 50°C for 48 hours. The weights of the coats after the immersion were determined. The percentage of water absorption was determined from the weights before and after the immersion by the following formula, and evaluation was performed based on the following criteria.

Percentage of water absorption = {(weight of coat after immersion) - (weight of dry coat)}/(weight of dry coat) × 100 (wt%)

(Evaluation of appearance of coat after immersion in deionized water at 25°C for 48 hours)

Good: the shape of the coat remained the same as that before immersion.

Poor: the shape of the coat greatly differed from that before immersion. Part or the whole of the coat was lost.

<Evaluation of damping properties after water resistance test>

The cantilever specimen used in the damping test was immersed in deionized water at 25°C for 24 hours, and water on the specimen was wiped off. Immediately thereafter, the loss coefficient was determined as in the damping test.

The damping properties (the sum of loss coefficients at 10°C, 30°C, and 50°C) measured after the water resistance test are shown in Table 1. The percentage of change of damping properties between before and after the water resistance test was calculated using the following formula. The percentages of change are shown in Table 1.

Percentage of change (%) of damping properties before and after water resistance test = {damping properties measured before water resistance test (sum of loss coefficients at 10°C, 30°C, and 50°C) - damping properties measured after water resistance test (sum of loss coefficients at 10°C, 30°C, and 50°C)}/damping properties measured before water resistance test (sum of loss coefficients at 10°C, 30°C, and 50°C) × 100

[Table 1]

| | | | Example 1 + | Example 2 + | Example 3 + | Example 4 + | Example 5 ° | Example 6 + | Comparative Example 1 | Comparative Example 2 | Comparative Example 3 |
|---|---|---|---|---|---|---|---|---|---|---|---|
| Formulation of emulsion | Emulsifier 20% aq. (mass of solids) | SOFTANOL 300 | 125 (25) | 125 (25) | - | 125 (25) | - | - | - | - | 125 (25) |
| | | SOFTANOL 90 | - | - | 125 (25) | - | - | - | - | - | - |
| | | SOFTANOL 500 | - | - | - | - | 125 (25) | 125 (25) | - | - | - |
| | | LEVENOL WZ | 125 (25) | 125 (25) | 125 (25) | - | 125 (25) | 200 (40) | 250 (50) | - | 125 (25) |
| | | ADEKA REASOAP SR-10 | - | - | - | 125 (25) | - | - | - | - | - |
| | | NEOPELEX G-65 | - | - | - | - | - | - | - | 250 (50) | - |
| | Monomer | MMA | 550 | - | 550 | - | 295 | - | 550 | 550 | 550 |
| | | St | - | 550 | - | 550 | 255 | 550 | - | - | - |
| | | BA | 310 | 130 | 310 | 310 | 310 | 130 | 310 | 310 | 310 |
| | | 2EHA | 130 | 310 | 130 | 130 | 130 | 310 | 130 | 130 | 130 |
| | | AA | 10 | 10 | 10 | 10 | 10 | 10 | 10 | 10 | 10 |
| | | t-DM *1 | 1.2 | 1.2 | 1.8 | 2.5 | 3.5 | 2.7 | 1.8 | 1.8 | 5.0 |
| Weight average molecular weight of emulsion | | | 347,000 | 276,000 | 221,000 | 155,000 | 85,000 | 115,000 | 230,000 | 228,000 | 51,000 |
| Result | Water resistance | Percentage of water absorption (25°C/48 hr) | 14% | 14% | 15% | 18% | 28% | 21% | 39% | 37% | 59% |
| | | Percentage of water absorption (50°C/48 hr) | 29% | 32% | 37% | 41% | 49% | 39% | 74% | 69% | 84% |
| | | Coat appearance after immersion (25°C/48 hr) | Good | Good | Good | Good | Good | Good | Good | Good | Poor |
| | Damping properties before immersion (loss coefficient) | Sum (10°C + 30°C + 50°C) | 0.303 | 0.309 | 0.312 | 0.309 | 0.351 | 0.334 | 0.254 | 0.262 | 0.273 |
| | Damping properties after immersion (loss coefficient) | Sum (10°C + 30°C + 50°C) | 0.272 | 0.285 | 0.271 | 0.274 | 0.266 | 0.273 | 0.185 | 0.177 | 0.15 |
| | Percentage (%) of change of damping properties between before and after immersion | | 10% | 8% | 13% | 11% | 24% | 18% | 27% | 32% | 45% |

*1 t-DM: t-dodecyl mercaptan (chain transfer agent)

° Example according to the present invention

+ Reference Example

Comparison of Examples 1 to 6 with Comparative Examples 1 and 2, in particular, comparison of Example 3 with Comparative Example 1 which were performed under the same production conditions except for the emulsifiers (surfactants), demonstrated that use of not only an anionic surfactant but also a secondary alcohol ethoxylate structure-based surfactant as surfactants achieved remarkably good water resistance (in particular, hot water resistance). It

also demonstrated that better damping properties were achieved, and the damping properties were more sufficiently maintained even after the water resistance test.

Comparison of Examples 1 to 6 with Comparative Example 3 demonstrated that use of a resin having a weight average molecular weight of 60000 to 350000 achieved remarkably good water resistance (in particular, hot water resistance). It also demonstrated that better damping properties were achieved, and the damping properties were more sufficiently maintained even after the water resistance test.

The damping coating materials of the examples containing a secondary alcohol ethoxylate structure-based surfactant as a surfactant and a resin having a weight average molecular weight of 60000 to 350000 in combination can provide coats that have excellent water resistance and sufficiently show excellent damping properties even under high-temperature and high-humidity conditions.

The coats of the examples can reduce a decrease in damping properties due to water absorbed and reduce the change of a curve of correlation (damping property curve) between the temperature and the damping properties. Thereby, the qualities of the coats can be maintained over a long period of time.

## Claims

1. A damping material resin composition comprising:

   a secondary alcohol ethoxylate structure-based surfactant component represented by the following formula (1):

   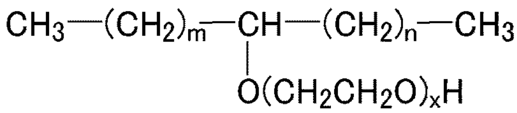

   (1)

   wherein m and n are each an integer of 0 or more, and x is the average number of moles of ethylene oxide added and is 20 to 200, wherein the average number of moles of ethylene oxide added means the average number of moles of ethylene oxide added per mole of the hydroxy groups of the secondary alcohol;
   an anionic surfactant component;
   wherein the secondary alcohol ethoxylate structure-based surfactant component and the anionic surfactant component are present in a mass ratio of 3:7 to 7:3; and
   a resin comprising a (meth)acrylic polymer and having a weight average molecular weight of 110000 to 350000 measured by gel permeation chromatography (GPC) under the conditions described in the description.

2. The damping material resin composition according to claim 1,
   wherein the secondary alcohol ethoxylate structure-based surfactant component is present in an amount of 0.1 to 20% by mass based on 100% by mass of the solids of the resin.

3. The damping material resin composition according to claim 1 or 2,
   wherein the anionic surfactant component comprises an aliphatic hydrocarbon group-containing anionic surfactant component.

4. The damping material resin composition according any one of claims 1 to 3,
   wherein the anionic surfactant component is present in an amount of 0.1 to 20% by mass based on 100% by mass of the solids of the resin.

5. The damping material resin composition according to any one of claims 1 to 4,
   wherein the resin is in the form of emulsion resin particles obtainable by emulsion polymerizing a monomer component.

6. The damping material resin composition according to any one of claims 1 to 5,
   wherein the resin comprises a polymer containing a constituent unit derived from an aromatic ring-containing unsaturated monomer.

7. The damping material resin composition according to any one of claims 1 to 6,
   wherein the (meth)acrylic polymer has a core and a shell.

8. A method of producing a damping material resin composition, comprising:
emulsion polymerizing a monomer component in the presence of a secondary alcohol ethoxylate structure-based surfactant component represented by the following formula (1):

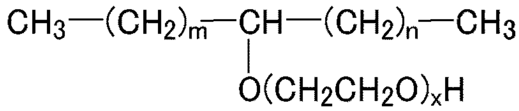
(1)

wherein m and n are each an integer of 0 or more, and x is the average number of moles of ethylene oxide added and is 20 to 200, wherein the average number of moles of ethylene oxide added means the average number of moles of ethylene oxide added per mole of the hydroxy groups of the secondary alcohol;
as well as an anionic surfactant component,
wherein the secondary alcohol ethoxylate structure-based surfactant component and the anionic surfactant component are present in a mass ratio of 3:7 to 7:3, to prepare emulsion resin particles comprising a (meth)acrylic polymer and wherein the resin has a weight average molecular weight of 110000 to 350000 measured by gel permeation chromatography (GPC) under the conditions described in the description.

9. A damping coating material comprising:

the damping material resin composition according to any one of claims 1 to 7; and
a pigment.

10. A coat obtainable from the damping coating material according to claim 9.

11. A vehicle comprising the coat according to claim 10.

12. Use of a compound containing a damping material resin composition and a pigment, as a damping coating material, wherein the damping material resin composition comprises:

- a secondary alcohol ethoxylate structure-based surfactant component represented by the following formula (1):

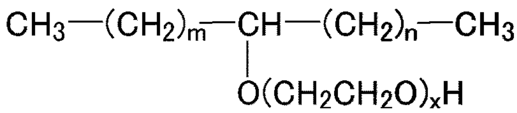
(1)

wherein m and n are each an integer of 0 or more, and x is the average number of moles of ethylene oxide added and is 20 to 200, wherein the average number of moles of ethylene oxide added means the average number of moles of ethylene oxide added per mole of the hydroxy groups of the secondary alcohol,

as well as an anionic surfactant component,
wherein the secondary alcohol ethoxylate structure-based surfactant component and the anionic surfactant component are present in a mass ratio of 3:7 to 7:3, and

- a resin comprising a (meth)acrylic polymer and having a weight average molecular weight of 110000 to 350000 measured by gel permeation chromatography (GPC) under the conditions described in the description.

## Patentansprüche

1. Dämpfungsmaterial-Harzzusammensetzung, umfassend:
eine Tensidkomponente auf Basis einer Ethoxylat-Struktur eines sekundären Alkohols, die durch die folgende Formel (1) dargestellt ist:

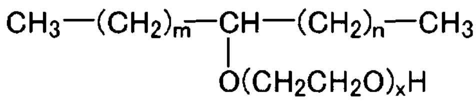
(1)

wobei m und n jeweils eine ganze Zahl von 0 oder mehr sind, und x die durchschnittliche Anzahl von Mol von zugegebenem Ethylenoxid ist und 20 bis 200 beträgt, wobei die durchschnittliche Anzahl von Mol von zugegebenem Ethylenoxid für die durchschnittliche Anzahl von Mol von zugegebenem Ethylenoxid pro Mol der Hydroxygruppen des sekundären Alkohols steht;
eine anionische Tensidkomponente;
wobei die Tensidkomponente auf Basis einer Ethoxylat-Struktur eines sekundären Alkohols und die anionische Tensidkomponente in einem Massenverhältnis von 3:7 bis 7:3 vorliegen; und
ein Harz, umfassend ein (Meth)acrylpolymer und aufweisend eine gewichtsmittlere Molmasse von 110.000 bis 350.000, gemessen mittels Gelpermeationschromatographie (GPC) unter den in der Beschreibung beschriebenen Bedingungen.

**2.** Dämpfungsmaterial-Harzzusammensetzung nach Anspruch 1, wobei die Tensidkomponente auf Basis einer Ethoxylat-Struktur eines sekundären Alkohols in einer Menge von 0,1 bis 20 Massen-% vorliegt, bezogen auf 100 Massen-% des Festkörpers des Harzes.

**3.** Dämpfungsmaterial-Harzzusammensetzung nach Anspruch 1 oder 2,
wobei die anionische Tensidkomponente eine eine aliphatische Kohlenwasserstoffgruppe enthaltende anionische Tensidkomponente umfasst.

**4.** Dämpfungsmaterial-Harzzusammensetzung nach einem der Ansprüche 1 bis 3,
wobei die anionische Tensidkomponente in einer Menge von 0,1 bis 20 Massen-% vorliegt, bezogen auf 100 Massen-% des Festkörpers des Harzes.

**5.** Dämpfungsmaterial-Harzzusammensetzung nach einem der Ansprüche 1 bis 4,
wobei das Harz in der Form von Emulsionsharzpartikeln ist, die durch Emulsionspolymerisieren einer Monomerkomponente erhalten werden können.

**6.** Dämpfungsmaterial-Harzzusammensetzung nach einem der Ansprüche 1 bis 5,
wobei das Harz ein Polymer umfasst, das eine konstituierende Einheit enthält, die von einem einen aromatischen Ring enthaltenden ungesättigten Monomer abgeleitet ist.

**7.** Dämpfungsmaterial-Harzzusammensetzung nach einem der Ansprüche 1 bis 6,
wobei das (Meth)acrylpolymer einen Kern und eine Schale aufweist.

**8.** Verfahren zur Produktion einer Dämpfungsmaterial-Harzzusammensetzung, umfassend:
Emulsionspolymerisieren einer Monomerkomponente in Gegenwart einer Tensidkomponente auf Basis einer Ethoxylat-Struktur eines sekundären Alkohols, die durch die folgende Formel (1) dargestellt ist:

$$CH_3-(CH_2)_m-\underset{O(CH_2CH_2O)_xH}{\underset{|}{CH}}-(CH_2)_n-CH_3 \qquad (1)$$

,

wobei m und n jeweils eine ganze Zahl von 0 oder mehr sind, und x die durchschnittliche Anzahl von Mol von zugegebenem Ethylenoxid ist und 20 bis 200 beträgt, wobei die durchschnittliche Anzahl von Mol von zugegebenem Ethylenoxid für die durchschnittliche Anzahl von Mol von zugegebenem Ethylenoxid pro Mol der Hydroxygruppen des sekundären Alkohols steht;
sowie einer anionischen Tensidkomponente,
wobei die Tensidkomponente auf Basis einer Ethoxylat-Struktur eines sekundären Alkohols und die anionische Tensidkomponente in einem Massenverhältnis von 3:7 bis 7:3 vorliegen, um Emulsionsharzpartikel, umfassend ein (Meth)acrylpolymer, herzustellen, und wobei das Harz eine gewichtsmittlere Molmasse von 110.000 bis 350.000 aufweist, gemessen mittels Gelpermeationschromatographie (GPC) unter den in der Beschreibung beschriebenen Bedingungen.

**9.** Dämpfungsbeschichtungsmaterial, umfassend:

die Dämpfungsmaterial-Harzzusammensetzung nach einem der Ansprüche 1 bis 7; und
ein Pigment.

**10.** Überzug, der aus dem Dämpfungsbeschichtungsmaterial nach Anspruch 9 erhalten werden kann.

**11.** Fahrzeug, umfassend den Überzug nach Anspruch 10.

**12.** Verwendung einer Verbindung, die eine Dämpfungsmaterial-Harzzusammensetzung und ein Pigment enthält, als ein Dämpfungsbeschichtungsmaterial,
wobei die Dämpfungsmaterial-Harzzusammensetzung umfasst:

- eine Tensidkomponente auf Basis einer Ethoxylat-Struktur eines sekundären Alkohols, die durch die folgende Formel (1) dargestellt ist:

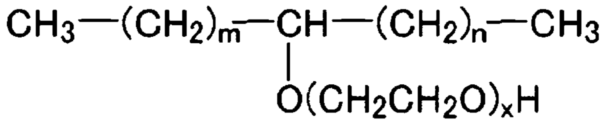
(1)
,

wobei m und n jeweils eine ganze Zahl von 0 oder mehr sind, und x die durchschnittliche Anzahl von Mol von zugegebenem Ethylenoxid ist und 20 bis 200 beträgt, wobei die durchschnittliche Anzahl von Mol von zugegebenem Ethylenoxid für die durchschnittliche Anzahl von Mol von zugegebenem Ethylenoxid pro Mol der Hydroxygruppen des sekundären Alkohols steht;
sowie eine anionische Tensidkomponente,
wobei die Tensidkomponente auf Basis einer Ethoxylat-Struktur eines sekundären Alkohols und die anionische Tensidkomponente in einem Massenverhältnis von 3:7 bis 7:3 vorliegen; und

- ein Harz, umfassend ein (Meth)acrylpolymer und aufweisend eine gewichtsmittlere Molmasse von 110.000 bis 350.000, gemessen mittels Gelpermeationschromatographie (GPC) unter den in der Beschreibung beschriebenen Bedingungen.

## Revendications

**1.** Composition de résine pour matériau amortisseur comprenant :
un composant tensioactif basé sur une structure d'alcool secondaire éthoxylé, représenté par la formule (1) suivante :

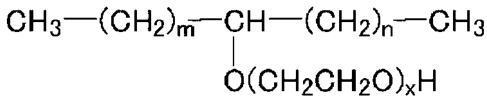
(1)

dans laquelle chacun de m et n est un entier valant 0 ou plus, et x est le nombre moyen de moles d'oxyde d'éthylène ajoutées et vaut de 20 à 200, dans laquelle le nombre moyen de moles d'oxyde d'éthylène ajoutées signifie le nombre moyen de moles d'oxyde d'éthylène ajoutées par mole des groupes hydroxy de l'alcool secondaire ;
un composant tensioactif anionique ;
dans laquelle le composant tensioactif basé sur une structure d'alcool secondaire éthoxylé et le composant tensioactif anionique sont présents en un rapport en masse de 3/7 à 7/3 ; et
une résine comprenant un polymère (méth)acrylique et ayant une masse moléculaire moyenne en masse de 110 000 à 350 000, mesurée par chromatographie par perméation de gel (GPC) dans les conditions décrites dans la description.

**2.** Composition de résine pour matériau amortisseur selon la revendication 1, dans laquelle le composant tensioactif basé sur une structure d'alcool secondaire éthoxylé est présent en une quantité de 0,1 à 20 % en masse pour 100 % en masse des solides de la résine.

**3.** Composition de résine pour matériau amortisseur selon la revendication 1 ou 2, dans laquelle le composant tensioactif anionique comprend un composant tensioactif anionique contenant un groupe hydrocarboné aliphatique.

**4.** Composition de résine pour matériau amortisseur selon l'une quelconque des revendications 1 à 3, dans laquelle le

composant tensioactif anionique est présent en une quantité de 0,1 à 20 % en masse pour 100 % en masse des solides de la résine.

**5.** Composition de résine pour matériau amortisseur selon l'une quelconque des revendications 1 à 4, dans laquelle la résine est sous la forme de particules de résine en émulsion pouvant être obtenues par polymérisation en émulsion d'un composant monomère.

**6.** Composition de résine pour matériau amortisseur selon l'une quelconque des revendications 1 à 5, dans laquelle la résine comprend un polymère contenant un motif constitutif dérivé d'un monomère insaturé contenant un cycle aromatique.

**7.** Composition de résine pour matériau amortisseur selon l'une quelconque des revendications 1 à 6, dans laquelle le polymère (méth)acrylique a un cœur et une gaine.

**8.** Procédé de production d'une composition de résine pour matériau amortisseur, comprenant :
la polymérisation en émulsion d'un composant monomère en présence d'un composant tensioactif basé sur une structure d'alcool secondaire éthoxylé, représenté par la formule (1) suivante :

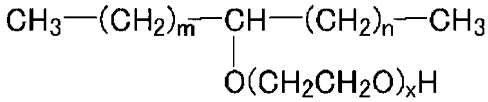
(1)

dans laquelle chacun de m et n est un entier valant 0 ou plus, et x est le nombre moyen de moles d'oxyde d'éthylène ajoutées et vaut de 20 à 200, dans laquelle le nombre moyen de moles d'oxyde d'éthylène ajoutées signifie le nombre moyen de moles d'oxyde d'éthylène ajoutées par mole des groupes hydroxy de l'alcool secondaire ;
ainsi que d'un composant tensioactif anionique,
dans lequel le composant tensioactif basé sur une structure d'alcool secondaire éthoxylé et le composant tensioactif anionique sont présents en un rapport en masse de 3/7 à 7/3, pour préparer des particules de résine en émulsion comprenant un polymère (méth)acrylique, et dans lequel la résine a une masse moléculaire moyenne en masse de 110 000 à 350 000, mesurée par chromatographie par perméation de gel (GPC) dans les conditions décrites dans la description.

**9.** Matériau de revêtement amortisseur comprenant :

la composition de résine pour matériau amortisseur selon l'une quelconque des revendications 1 à 7 ; et
un pigment.

**10.** Revêtement pouvant être obtenu à partir du matériau de revêtement amortisseur selon la revendication 9.

**11.** Véhicule comprenant le revêtement selon la revendication 10.

**12.** Utilisation d'un composé contenant une composition de résine pour matériau amortisseur et un pigment, à titre de matériau de revêtement amortisseur, dans laquelle la composition de résine pour matériau amortisseur comprend :

- un composant tensioactif basé sur une structure d'alcool secondaire éthoxylé, représenté par la formule (1) suivante :

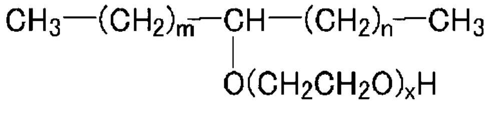
(1)

dans laquelle chacun de m et n est un entier valant 0 ou plus, et x est le nombre moyen de moles d'oxyde d'éthylène ajoutées et vaut de 20 à 200, dans laquelle le nombre moyen de moles d'oxyde d'éthylène ajoutées signifie le nombre moyen de moles d'oxyde d'éthylène ajoutées par mole des groupes hydroxy de l'alcool secondaire,
ainsi qu'un composant tensioactif anionique,

dans laquelle le composant tensioactif basé sur une structure d'alcool secondaire éthoxylé et le composant tensioactif anionique sont présents en un rapport en masse de 3/7 à 7/3, et

- une résine comprenant un polymère (méth)acrylique et ayant une masse moléculaire moyenne en masse de 110 000 à 350 000, mesurée par chromatographie par perméation de gel (GPC) dans les conditions décrites dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016164230 A
- JP 2016540090 T
- EP 3279285 A1
- JP 2011231184 A